# EUROPEAN PATENT SPECIFICATION

(11) **EP 1 801 809 B1**
(45) Date of publication and mention of the grant of the patent: **25.05.2011**
(21) Application number: 06256315.0
(22) Date of filing: 12.12.2006
(51) Int. Cl.: G11B 27/30, H04N 5/45

(54) **Additional images recording synchronisation while reproducing main image e.g. for Picture in Picture PiP.**
Synchronisierung der Aufzeichnung von ergänzenden Bildern während der Wiedergabe von Hauptbildern e.g. für Bild-im-Bild.
Synchronisation d'enregistrement d'images additionnelles pendant la reproduction de l'image principale e.g. pour incrustation d' image.

(30) Priority: 22.12.2005 JP 2005369023
(43) Date of publication of application: 27.06.2007
(73) Proprietor: Hitachi, Ltd., Chiyoda-ku Tokyo (JP)
(72) Inventor: Komi, Hironori, Hitachi, Ltd., Chiyoda-ku Tokyo 100-8220 (JP); Yoshida, Susumu, Hitachi, Ltd., Chiyoda-ku Tokyo 100-8220 (JP)
(74) Representative: Calderbank, Thomas Roger

(56) References cited:
- EP-A- 1 206 141
- EP-A1- 1 367 587
- WO-A-2005/029854
- JP-A- 11 238 359
- US-A1- 2004 208 135

## Description

The present invention relates to an image and audio recording/reproducing apparatus for coding and recording an image and audio signal.

As a background art relating to the present technical field, Japanese Patent Laying-Open No. Hei 11-238359 (1999) describes "providing an image recording/recording apparatus for obtaining a superior utility, such as, obtaining high degree of freedom relating to recording", as a problem to be solved and an image recording/reproducing apparatus as a means for solving this problem. This document describes that "the image recording/reproducing apparatus is so constructed that it can record sub-image data relating to a main image data by conducting reproduction of the main image data in parallel with recording the sub-image data relating to the main image data, the main image data having already been recorded in a recording medium 6 made from a solid memory, and it can reproduce the sub-image data by linking it to reproduction of the main image data".

There are already known image and audio signal recording/reproducing apparatuses for recording and coding image and audio signals onto a recording medium, such as DVD or HDD, etc. Along with improvements in increasing recording capacity and speeding-up of reading/writing from/onto a recording medium, some of those apparatuses are loaded with a function such as run-after reproducing, i.e. reproducing signals previously recorded while recording new signals. Those technologies are based on a digital coding compression technology, such as, MPEG2 technology (ISO/IEC 13818-1 through 3 N0801 revised 25 April 1995), for example.

For example, as for a coding system on a video signal and a coding system on an audio signal, both systems are standardized in "MPEG2-Audio ISO/IEC13818-3 1998 and "MPEG2-Audio ISO/IEC13818-2-2 2000, as an international standard. A video and audio signal which are coded by each coding system are bit streams called as "Elementary Stream: ES", and there is a standardized system that such signals are further packetized and multiplexed. For examples, ISO/IEC13818-1 OR N801rev.25 April 1995 is exemplified as a standard of MPEG2.

In the standard of Annex D.0.1 - D.0.2 and D.0.8, pages 110, 111, 118 of ISO/IEC13818-1, when reproducing a decode of MPEG2-Video and MPEG2-Audio, both of the decodes and the timing synchronization in output are described. Herein, while counting up a system time clock (STC) as a standard time, the method for controlling such synchronization is described, in comparison with a decoding time stamp (DTS) added to a bit stream of a Video and Audio. commentary picture onto an image previously taken by a video camera apparatus.

Japanese Patent Laying-Open No. Hei 11-238359 (1999) describes that its image recording/reproducing apparatus can "record sub-image data relating to main image data by conducting reproduction of the main image data in parallel with recording the sub-image data relating to the main image data, the main image data having already been recorded in a recording medium 6 made from a solid memory, and it can reproduce the sub-image data by linking it to reproduction of the main image data". However no explanation in this document is given as to when the sub-image data is reproduced, or how synchronization is achieved with respect to reproduction of the main image. Nor does this document give any consideration to additionally recording a plurality of sub-image data to one main image data.

It may be the case that one wishes to record sub-images only at portions of a main image, (for example, recording a first sub-image in a first half of one piece of the main image, recording a second sub-image in the middle of the main image, and recording a third sub-image in a last half of the main images). However according to the invention described in the Japanese Patent Laying-Open No. Hei 11-238359 (1999) it is only possible to record images and sub images on a one to one basis, and no control is provided as to the timing of reproduction of the main image and the sub-image. Therefore, with the apparatus of Japanese Patent Laying-Open No. Hei 11-238359 (1999), it is impossible to obtain a scene of practical use as mentioned above.

Also, there may be cases where one wishes to change the timing of reproducing of the sub-image with respect to the main image after the sub-image has been recorded. However, it is impossible to change the timing of reproducing with the apparatus of Japanese Patent Laying-Open No. Hei 11-238359 (1999), since no control is provided for changing the timing of reproduction of the main image and the sub-image.

Recording of the sub-image only at portions of the main image and/or changing the timing for reproduction of the sub-images can be important function(s), which may appear or be frequently needed, when using an image and audio recording/reproducing apparatus. It can be said that an image and audio recording/reproducing apparatus achieving such function(s) would be superior in usability.

A preferred aim is, according to the present invention, to provide a method of recording and reproducing image/audio data using an image and audio recording/reproducing apparatus to achieve an improvement in usability.

The aim mentioned above is accomplished, for example, by a method of recording and reproducing image/audio data as set out in claim 1.

Those and other features, and objects advantages of the present invention will become more apparent from the following detailed description when taken in conjunction with the accompanying drawings wherein:
Fig. 1 is a block diagram showing a video camera according to a first embodiment of the invention;
Figs. 2 (A) and 2 (B) are views showing a picture-in-picture outputted by the video camera of the first embodiment of the invention;
Fig. 3 is a view showing relationships among first, second and third image/audio signals and STC according to a second embodiment of the invention;
Fig. 4 is a view showing relationships among first, second and third image/audio signals and STC according to a third embodiment of the invention;
Fig. 5 is a view showing relationships among first, second, third and fourth image/audio signals and STC according to a fourth embodiment of the invention.

Hereinafter, embodiments according to the present invention will be fully explained by referring to the attached drawings.

### <Embodiment 1>

The present embodiment relates to a digital video camera, using an optical disk as a recording medium. The digital video camera has a function of reproducing a first coded image/audio data which was previously recorded on the optical disk, and of recording a second coded image/audio data on the optical disk during the reproducing operation. The digital video camera also has a function of outputting the first and second image/audio data in the form of a picture-in-picture screen, when reproducing them.

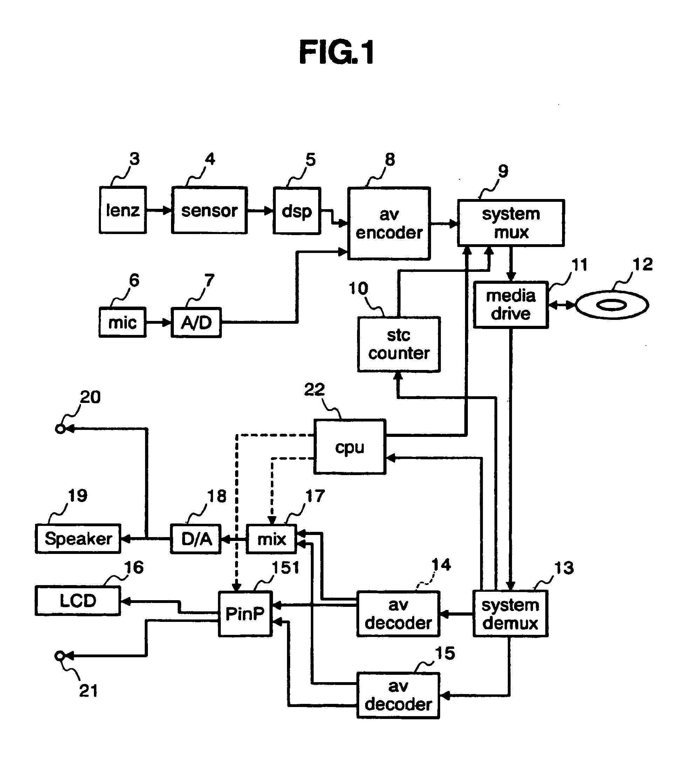

Fig. 1 shows the block diagram of Embodiment 1. Hereinafter, explanation will be made, by referring to Fig. 1. First of all, explanation will be made of the operations carried out when recording a normal first coded image/audio data. Upon pushing down of a record-start button (not shown in Fig. 1) by a user, a CPU 22 controls each of blocks 1 through 11 to conduct the recording operation. An image signal taken or picked up through a lens portion 3 is converted into an electric signal through a sensor portion 4, such as a CCD or the like, and is processed within a signal processor portion 5 in the form of a digital image signal, to be transmitted to an Audio/Video coding block 8. At the same time, audio is taken or picked up through a microphone portion 6 and is converted into a digital audio data within an analog/digital converter block 7, to be transmitted into the Audio/Video coding block 8. Within the Audio/Video coding block 8, the image and the audio signals are coded into an elementary stream (ES), in accordance with a standard such as MPEG 2 and MPEG 1 Layer II. The coded ES is treated with a packetizing process within a system-multiplexing portion 9, so that it can be recorded onto the optical disk 12. For example, the ES is recorded in the form of a program stream (PS) in accordance with the MPEG 2 Systems. When recording, a system time clock (STC) is counted up within a STC counter 10 upon basis of a standard clock (for example, 27 MHz) of the whole system. When the ES is changed or converted into a PS, a reproduction time information, which is called a decoding time stamp (DTS) is added to both the image and audio, based on the standard time information STC mentioned above. The DTS is indicative of the timing at which the image and audio signals should be decoded. When decoding, in a similar manner to when encoding, the STC is counted up from the time of starting reproduction. Decoding is carried out on the stream of image and audio having a DTS coincident with the STC, thereby enabling to synchronization between the reproduced image and audio signals (e.g. a lip sync).

In the present embodiment, within the system-multiplexing portion 9, the DTS information is added within Packetized Elementary Stream (PES) of image and audio.

The data packetized within the system-multiplexing portion 9 is transferred to a media drive 11, together with management information for managing recorded data within a disk (i.e. inner-medium logical block information indicating start and end points of each recording or time correspondence information). The media drive 11 controls rotation number (or speed) of the optical disk 12, laser strength, and a pickup device, thereby recording data onto the optical disk 12 mentioned above.

Next, within the present embodiment, explanation will be made of the operations carried out when reproducing the data recorded on the optical disk 12. The data recorded on the optical disk 12 is read out from the optical disk 12 by means of the media drive 11 when a user instructs the reproduction thereof. The data is then transferred to a system separation portion 13. Firstly, in this system separation portion 13, management information is read out from the optical disk 12 and is transferred to the CPU 22. After acknowledging the position of desired data on the optical disk 12, data streams can be transferred from the media drive 11 to the system separation portion 13 at any time. The image and audio data in the form of the ES are recovered by removing the header or the like of the packet within system separation portion 13 and are transferred to an AudioVideo decoder 14. Counting up of the STC is started from the time when the decoding started. Within the AudioVideo decoder portion 14, decoding of the respective image and audio data is started from the time at which the image and audio data have a DTS that coincides with the STC, thereby outputting decoded image and audio in a synchronous condition. The decoded image is transferred to a picture-in-picture (PinP) block 151. Since only one set of image/audio signals are outputted when conducting this operation, the image is outputted to a liquid crystal display 16 to an external monitor via an output terminal 21 without being treated by the PinP block 151. The audio is outputted to a mixer 17 and then to a speaker block 19 or an audio output terminal 20 through a digital/analog converter circuit 18.

Next, explanation will be made of the operations carried out for recording a second image/audio data on the optical disk 12 while reproducing a first image/audio data which has already been recorded on the optical disk 12. The reproducing operation of the first image/audio data is similar to that mentioned above. While viewing the first image/audio which are being reproduced by the liquid crystal display 16 or the external monitor, the user pushes down a second image/audio start button at the time when she/he wishes to add the second image/audio data to the first image/audio data. Upon this, the CPU causes the blocks 3 through 11 to conduct the encoding operation as described above. However, the STC counter is already counting for decoding of the first image/audio data. Therefore, the DTS to be added to the second image/audio data by the system-multiplexing portion 9 is calculated to correspond to the STC being counted for decoding of the first image/audio data. In this instance, an adjustment is made so that the DTS added to the second image/audio data is the same as the DTS of the frame of the first image/audio signal which was displayed on the LCD when the second image/audio signal was inputted into the lens 3.

In the operations mentioned above, a read request for the first image/audio data and a write request for the second image/audio data are inputted to the media drive 11 from the decoder side and encoder side respectively. However, the optical disk 12 needs time for the media drive 11 to switch between read and write operations (to move the pickup, etc.) thereby bringing about a time overhead. For reducing this overhead, the CPU 22 provides buffering before transferring the data on the reproducing side and the recording side to the media drive 11, and thereby conducts the process so as to reduce the number of times the media drive 11 switches between read and write operations.

Also, the time correspondence information is recorded into the management information to be recorded onto the optical disk 12, the time correspondence information being information indicative of which of the first image/audio data and the second image/audio data should be outputted in synchronism with the common STC.

With the method mentioned above, it is possible to record one image/audio signal in synchronism with reproduction of another image/audio signal. For example, it is possible to reproduce an image of a baseball game previously recorded outdoors, and then to record an image of a coach viewing the baseball game indoors and of his giving technical guidance as a sub-image.

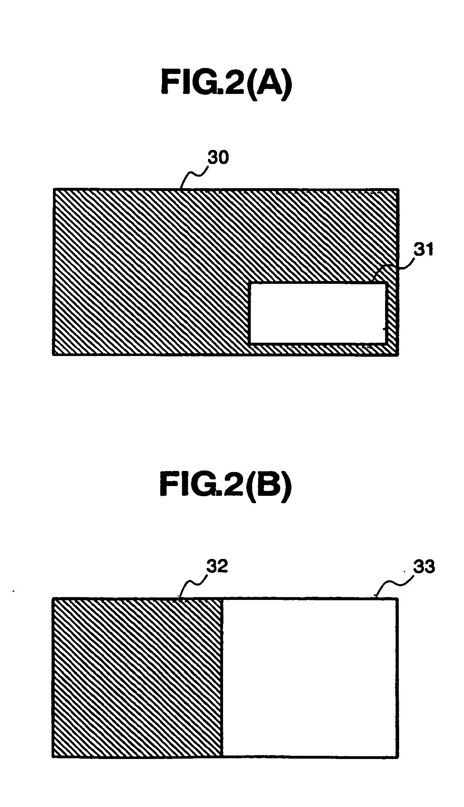

When reproducing the first and second images simultaneously, reproduction of the first and second image data is started from the media drive 11. Since the STC is held in common to the first and second image/audio data, and the data to be outputted simultaneously is described in the management information on the optical disk 12, the CPU 22 controls the reading of the first and second image/audio data by switching the media drive 11. The first and second image data are inputted into the system separation portion 13 and are then inputted into the AudioVideo decoder portion 14 and the AudioVideo decoder portion 15 respectively. Each of the AudioVideo decoders 14, 15 compares the STC value of the STC counter 10 (which started counting when the decoding started) with the DTS of the first and second image data, thereby starting the decoding at the stage when they coincide with each other. The image signal outputted by the AudioVideo decoders 14, 15 is treated using PinP processing by the PinP circuit 151. The PinP processing may have a mode of outputting in which the first image signal has a full-screen size with the second image signal having a small-screen size as shown by reference numerals 30 and 31 in Fig. 2, or may have a mode of outputting in which the first and second image signals are aligned in parallel with each other as shown by reference numerals 32 and 33 in Fig. 2. The first and second audio signals are mixed into stereo signals, for example by the mixer circuit 17, and are outputted therefrom.

### <Embodiment 2>

Next, explanation will be made of the operations carried out when recording a second image/audio signal at the same time as reproducing the bridging over between a point of stopping reproduction of a first image/audio signal and a point of starting reproduction of a third image/audio signal, where recording of the second image/audio signal continues after stoppage of the third image/audio signal.

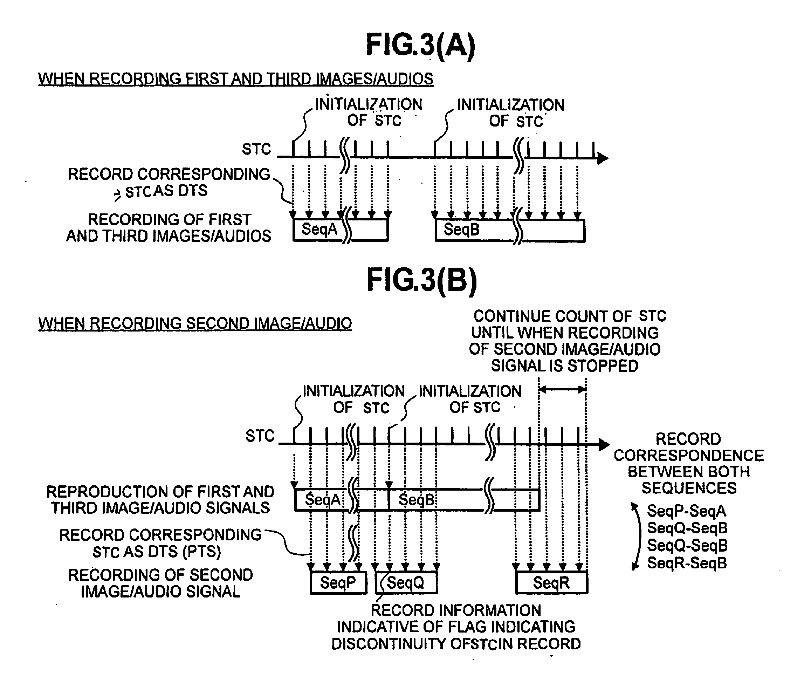

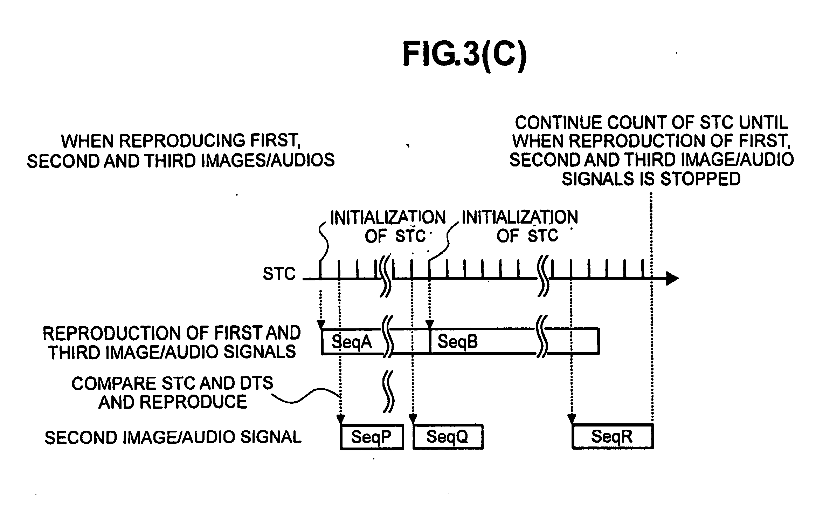

Fig. 3 shows each of the image/audio signals (Seq A, B, P, Q, R) and times when it is recorded or reproduced. Fig. 3a shows the recording of the first image/audio signal (Seq A) and the third image/audio signal (Seq B). Fig. 3b shows the time of recording three second image/audio signals (Seq P, Q, R) when the first and third image/audio signals (Seq A, B) are being reproduced. Fig. 3c shows the reproducing of the first, second and third image/audio signals.

Firstly, as is shown in Fig. 3a, recording of the first image/audio signal (Seq A) is started. Being initialized with this start of recording, the STC starts counting up and, the first image/audio signal (Seq A) records the STC corresponding to the first image/audio signal as the DTS. This is similar to the encoding shown in Embodiment 1. Next, when recording is started of the third image/audio signal (Seq B) after finishing the recording of the first image/audio signal (Seq A), the STC is initialized again and the counting up is started again since the first and third image/audio signals are independent. And then, recording is made of the DTS of the third image/audio signal (Seq B) as the STC corresponding to the third image/audio signal.

Next, as is shown in Fig. 3b, explanation will be made on the case of recording the second image/audio signals (Seq P, Q, R), while the first and third image/audio signals (Seq A, B) are being reproduced. Although the first and third image/audio signals (Seq A, B) were separated from each other in their time of recording, as is shown in Fig. 3a, they are reproduced continuously, i.e. seamlessly. In this instance, the STC corresponding to the first image/audio signal is initialized when the reproduction of the first image/audio signals starts and the STC corresponding to the third image/audio signal is initialized when the reproduction of the third image/audio signals starts.

Recording of the first one of the second image/audio signals (Seq P) is carried out in a similar manner to Embodiment 1, with the STC corresponding to the first image/audio signal recorded as the DTS, so that the first one of the second image/audio signals (Seq P) is in synchronism with the first image/audio signal (Seq A).

Though recording of the second one of the second image/audio signals (Seq Q) is basically similar to the Embodiment 1, it differs from Embodiment 1 in the following aspects: during recording of the second one of the second image/audio signals (Seq Q), reproduction of the first image/audio signal (Seq A) finishes and reproduction of the third image/audio signal (Seq B) starts, and the STC corresponding to the third image/audio signal is initialized. Before reproduction of the first image/audio signal is finished, the STC corresponding to the first image/audio signal (Seq A) is recorded as the DTS of the second one of the second image/audio signals (Seq Q). After finishing reproduction of the first image/audio signal (Seq A), the STC corresponding to the third image/audio signal (Seq B) is recorded as the DTS of the second one of the second image/audio signals (Seq Q). In this instance, when the second one of the second image/audio signals (Seq Q)is decoded, it becomes inconvenient to compare the DTS of the second one of the second image/audio signals (Seq Q) and the STC, because there is a discontinuity between the DTS and PTS presentation time stamp. For that reason, in the present embodiment, when detecting the discontinuous point of the STC on the reproduction side, a flag indicating the discontinuity of the STC is added into a packet of the corresponding time within data of the second image/audio signal.

Though recording of the third one of the second image/audio signals (Seq R) is basically similar to the Embodiment 1, it differs from Embodiment 1 in the following aspect: during recording of the third one of the second image/audio signals (Seq R), reproducing of the third image/audio signal (SeqB) finishes. Then, in this case, the STC corresponding to the third image/audio signal continues to count up even after reproduction of the third image/audio signal (Seq B) has finished, and the STC corresponding to the third image/audio signal is recorded to be the DTS, so that the third one of the second image/audio signals is in synchronism with the STC corresponding to the third image/audio signal.

As is shown in Fig. 3c, reproduction of the first, second and third image/audio signals is executed in the following manner. First, reproduction of the first and second image/audio signals (Seq A, P) are similar to that in the Embodiment 1. Thus, reproduction of the first image/audio signal (Seq A) is achieved by initializing the STC is to start the counting up and reproducing the first image/audio signal (Seq A) so that the DTS and the STC are in synchronism with each other. Then, comparison is made between the STC corresponding to the first image/audio signal and the DTS of the first one of the second image/audio signals (Seq P), and at the timing when the DTS is the same as the STC corresponding to the first image/audio signal, reproduction is started on the first one of the second image/audio signals (Seq P).

Next, reproduction is started on the second one of the second image/audio signals (Seq Q), in a similar manner, however it differs from Embodiment 1 in the following aspect: during reproduction of the second one of the second image/audio signals, the reproduction of the first image/audio signal (Seq A) is finished, reproduction is started on the third image/audio signal (Seq B), and the STC corresponding to the third one of the second image/audio signals is initialized. In this case, as explained earlier, since the information indicating discontinuity of the STC is added to the DTS of the second image/audio signal (Seq Q), then the second image/audio signal (Seq Q) is reproduced in synchronism with the STC of the first image/audio signal (Seq A) until finishing of reproduction of the first image/audio signal (Seq A), and thereafter, it is reproduced in synchronism with the STC of the third image/audio signal (Seq B).

Next, reproduction is started on the third one of the second image/audio signals (Seq R), and during this reproduction, the reproduction of the third image/audio signal (Seq B) finishes. In this case, the STC corresponding to the third image/audio signal is counted up continuously even if the reproduction of the third image/audio signal (Seq B) is finished, and the second image/audio signal (Seq R) continues to be reproduced in synchronism with the STC corresponding to the third image/audio signal (Seq B).

### <Embodiment 3>

Next, explanation will be made on Embodiment 3 which is a variation of Embodiment 2.

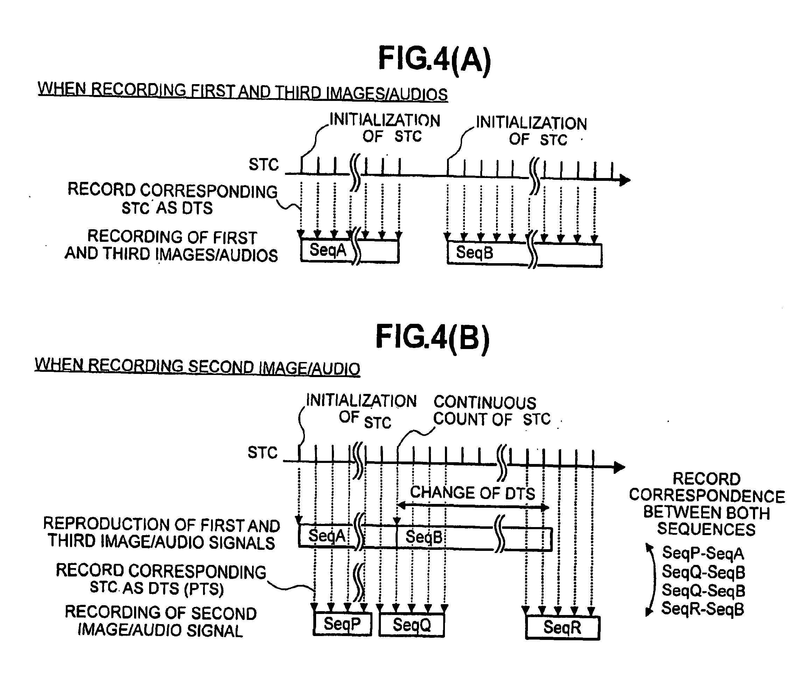

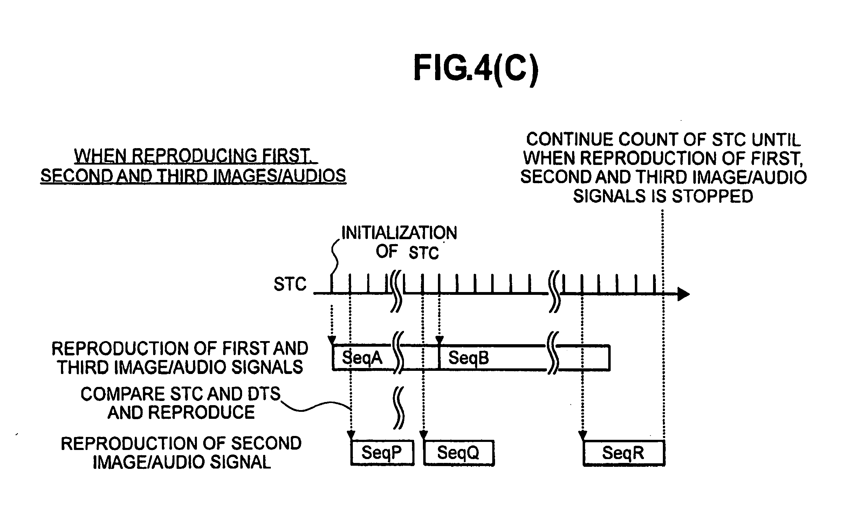

Fig. 4 shows the respective image/audio signals (Seq A, B, P, Q and R) and times when they are recorded or reproduced, in the similar manner to that in Fig. 3. Fig. 4a shows times when the first image/audio signal (Seq A) and the third image/audio signal (Seq B)are recorded. Fig. 4b shows times when three pieces of the second image/audio signals (Seq P, Q and R) are recorded during reproduction of the first and third image/audio signals (Seq A, B). Fig. 4c shows the times when reproducing the first, the second and the third image/audio signals. Explanation will be omitted about those parts which are the same as in the Embodiment shown in Fig. 3.

A difference from the Embodiment shown in Fig. 3 can be seen in Fig. 4b. In Fig. 3, the STC is initialized upon starting the reproduction of the third image/audio signal (Seq B) whilst the second of the second image/audio signals (Seq Q) is being recorded. However, in Fig. 4, the STC is counted up continuously. By working in this manner, it is possible to achieve timing control on reproduction of the first, second and third image/audio signals (Seq A, B, P, Q and R), with a continuous STC. In this case, as shown in Fig. 4b, the DTS of the third image/audio signal (Seq B) must be changed so that it is in synchronism with the STC, which is counted up continuously. Also, since the STC is discontinuous in Fig. 3, then the information indicative of this is added to the DTS of the second one of the second image/audio signal (Seq Q). This information is unnecessary in Fig. 4.

### <Embodiment 4>

Next, explanation will be made on the case when recording or reproducing a fourth image/audio signal (Seq C) separately, after the first, second and third image/audio signals (Seq A, B, P, Q and R) have been recorded in the manner of the Embodiment 2 shown in Fig. 3.

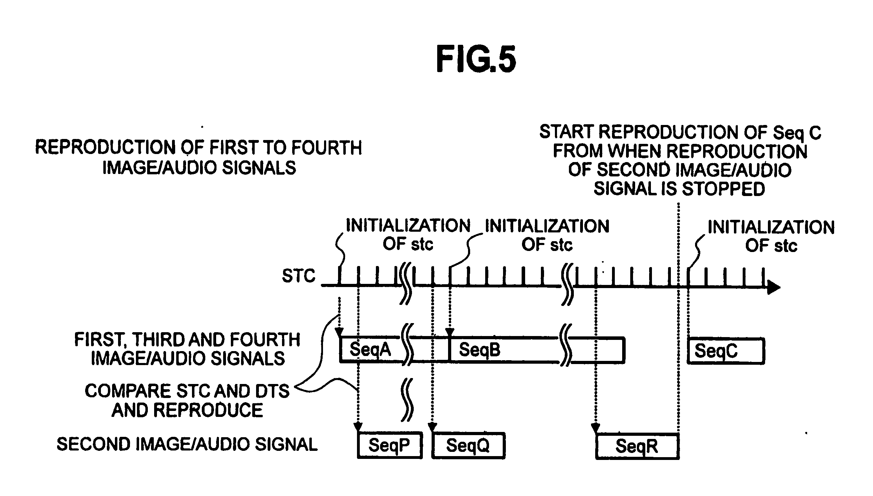

Fig. 5 shows the first, second and third image/audio signals (Seq A, B, P, Q and R) and the times when they are recorded or reproduced, and further of the fourth image/audio signal (Seq C). As is shown herein, in case of recording or reproducing the fourth image/audio signal (Seq C) separately from the first, second and third image/audio signals (Seq A, B, P, Q and R), the last image/audio signal (Seq R) among the first, second and third image/audio signals (Seq A, B, P, Q and R) is stopped, the STC is initialized, and then the fourth image/audio signal (Seq C) is recorded or reproduced.

In case when the fourth image/audio signal (Seq C) is recorded or reproduced within Embodiment 3 shown in Fig. 4, it is carried out in a manner similar to the manner described above with reference to Fig. 5.

While we have shown and described several embodiments in accordance with our invention, it should be understood that disclosed embodiments are susceptible of changes and modifications without departing from the scope of the invention as defined by the appended claims as interpreted by the figures and description. Therefore, we do not intend to be bound by the details shown and described herein but intend to cover all such changes and modifications that fall within the ambit of the appended claims as interpreted by the figures and description.

## Claims

1. A method of recording and reproducing image/audio data using an image and audio recording/reproducing apparatus, the apparatus comprising:
an input portion (3, 6) into which image/audio data are inputted; and
a recording/reproducing module (11) which is configured to record/reproduce the image/audio data onto/from a recording medium (12); and
a controller module (22),
the recording medium (12) including time correspondence information indicating the image/audio data to be reproduced in synchronism with a standard time information counter; and
the controller module (22) is used to control the apparatus to reproduce a first image/audio data in synchronism with the standard time information counter in accordance with the time correspondence information, the standard time information counter counting up from the time of starting reproduction of the first image/audio data;
**characterised in that**:
the method further includes using the controller module (22) to control the apparatus to:
produce a decode time stamp DTS representing a time relative to the start of the standard time information counter STC at which a second image/audio data is inputted into the input portion (3, 6) at the time of reproducing the first image/audio data;
record said second image/audio data onto said recording medium (12) together with said decode time stamp DTS and separately from said first image/audio data; and
reproduce said first image/audio data and said second image/audio data simultaneously such that reproduction of the second image/audio data is started at the decode time stamp DTS and the second image/audio data is reproduced during reproduction of said first image/audio data.

2. The method as described in claim 1, wherein:
said controller module (22) is further used to control the apparatus to:
record reproduction time information corresponding to the time of finishing inputting of the second image/audio data into said input portion, and
finish reproduction of said second image/audio data based on said reproduction time information, after said first image/audio data has been reproduced.

3. The method as described in claim 1, wherein:
a plural number of the second image/audio data are each recorded together with a respective reproduction time information indicative of the respective time of inputting of said second image/audio data during the time of reproducing one piece of the first image/audio data.

4. The method as described in claim 1, wherein:
said decode time stamp DTS is produced in synchronism with a standard time information, which is produced when said first image/audio data is reproduced.

5. The method as described in the claim 4, wherein:
changing said decode time stamp DTS which is added and recorded to said second image/audio data after recording said second image/audio data to correspond to reproduction time information which is in synchronism with the standard time information which is indicative of a time of reproduction of a portion of the first image/audio data which is reproduced when the second image/audio data is inputted.

6. The method as described in claim 5, wherein:
the standard time information produced when reproducing said first image/audio data is produced continuously and said decode time stamp DTS added to said second image/audio data is produced in synchronism with said continuously produced standard time information, when reproduction of said first image/audio data finishes during inputting and recording of the second image/audio data from said input portion.

7. The method as described in claim 6, wherein:
said standard time information is produced continuously and said second image/audio data is reproduced in synchronism with the continuously produced standard time information so that the decode time stamp DTS added to said second image/audio data is in synchronism with the standard time information relating to said first image/audio data, when reproduction of said first image/audio data finishes during reproduction of the second image/audio data.

8. The method as described in claim 5, wherein:
after production of the standard time information relating to said first image/audio data has finished, production of a standard time information relating to a third image/audio data is started, and the decode time stamp DTS added to said second image/audio data after reproduction of said first image/audio data has finished is produced to be in synchronism with the standard time information relating to said third image/audio data, when reproduction of the first image/audio data finishes and reproduction of the third image/audio data starts during inputting of the second image/audio data to be recorded from said input portion.

9. The method as described in claim 8, wherein:
information indicative of a discontinuity of the standard time information is added to the decode time stamp DTS to be added to said second image/audio data.

10. The method as described in claim 8, wherein:
after reproduction of said first image/audio data has finished and production of the standard time information of said third image/audio data has started, the second image/audio data is reproduced so that the decode time stamp (DTS) added to said second image/audio data is in synchronism with the standard time information of said third image/audio data, when reproduction of said first image/audio data finishes and reproduction of said third image/audio data starts during reproduction of the second image/audio data.

11. The method as described in claim 4, wherein:
the standard time information relating to said first image/audio data is produced continuously, decode time stamp DTS added to said second image/audio data is produced to be in synchronism with said continuously produced standard time information, and a decode time stamp DTS added to a third image/audio data is in synchronism with said continuously produced standard time information, when reproduction of said first image/audio data finishes and reproduction of the third image/audio data starts during inputting and recording of the second image/audio data from said input portion.

12. The method as described in claim 11, wherein:
the standard time information of said first image/audio data is produced continuously, the second image/audio data is reproduced so that the decode time stamp DTS added to said second image/audio data is in synchronism with said continuously produced standard time information, and the third image/audio data is reproduced so that the decode time stamp DTS added to said third image/audio data is in synchronism with said continuously produced standard time information, when reproduction of said first image/audio data finishes and reproduction of said third image/audio data starts during reproduction of the second image/audio data.

## Patentansprüche

1. Verfahren zum Aufzeichnen und Wiederherstellen von Bild-/Audiodaten mittels einer Aufzeichnungs-/Wiederherstellungsvorrichtung für Bild und Audio, wobei die Vorrichtung umfasst:
einen Eingabeabschnitt (3, 6), in den Bild-/Audiodaten eingegeben werden; und
ein Aufzeichnungs-/Wiederherstellungsmodul (11), das zum Aufzeichnen/Wiederherstellen der Bild-/Audiodaten auf/von einem Aufzeichnungsmedium (12) eingerichtet ist; und
ein Steuermodul (22),
wobei das Aufzeichnungsmedium (12) Zeitübereinstimmungsinformationen enthält, die Bild-/Audiodaten angeben, die synchron mit einem Standardzeitinformationszähler wiederherzustellen sind; und
das Steuermodul (22) dazu verwendet wird, die Vorrichtung dahingehend zu steuern, dass erste Bild-/Audiodaten synchron mit dem Standardzeitinformationszähler entsprechend den Zeitübereinstimmungsinformationen wiederhergestellt werden, wobei der Standardzeitinformationszähler vom Anfangszeitpunkt der Wiederherstellung der ersten Bild-/Audiodaten an hochzählt;
**gekennzeichnet dadurch, dass**:
das Verfahren ferner die Verwendung des Steuermoduls (22) dahingehend enthält, dass es die Vorrichtung zu Folgendem steuert:
Erzeugen eines Dekodierungszeitstempels DTS, der einen Zeitpunkt relativ zum Anfang des Standardzeitinformationszählers STC darstellt, zu dem zweite Bild-/Audiodaten in den Eingabeabschnitt (3, 6) zum Zeitpunkt der Wiederherstellung der ersten Bild-/Audiodaten eingegeben werden;
Aufzeichnen der zweiten Bild-/Audiodaten auf das Aufzeichnungsmedium (12) zusammen mit dem Dekodierungszeitstempel DTS und separat von den ersten Bild-/Audiodaten; und
gleichzeitiges Wiederherstellen der ersten Bild-/Audiodaten und der zweiten Bild-/Audiodaten, so dass die Wiederherstellung der zweiten Bild-/Audiodaten beim Dekodierungszeitstempel DTS begonnen wird und die zweiten Bild-/Audiodaten während der Wiederherstellung der ersten Bild-/Audiodaten wiederhergestellt werden.

2. Verfahren wie in Anspruch 1 beschrieben, wobei:
das Steuermodul (22) ferner dazu verwendet wird, die Vorrichtung zu Folgendem zu steuern:
Aufzeichnen von Wiederherstellungszeitinformationen, die dem Zeitpunkt entsprechen, zu dem das Eingeben der zweiten Bild-/Audiodaten in den Eingabeabschnitt beendet wird, und
Beenden der Wiederherstellung der zweiten Bild-/Audiodaten auf der Grundlage der Wiederherstellungszeitinformationen, nachdem die ersten Bild-/Audiodaten wiederhergestellt worden sind.

3. Verfahren wie in Anspruch 1 beschrieben, wobei:
mehrere der zweiten Bild-/Audiodaten jeweils zusammen mit entsprechenden Wiederherstellungszeitinformationen aufgezeichnet werden, die den jeweiligen Zeitpunkt angeben, zu dem die zweiten Bild-/Audiodaten während der Wiederherstellungszeit für ein Element der ersten Bild-/Audiodaten eingegeben werden.

4. Verfahren wie in Anspruch 1 beschrieben, wobei:
der Dekodierungszeitstempel DTS synchron mit Standardzeitinformationen erzeugt wird, die erzeugt werden, wenn die ersten Bild-/Audiodaten wiederhergestellt werden.

5. Verfahren wie in Anspruch 4 beschrieben, umfassend:
Ändern des Dekodierungszeitstempels DTS, der zu den zweiten Bild-/Audiodaten hinzugefügt und aufgezeichnet wird, nachdem die zweiten Bild-/Audiodaten wiederhergestellt worden sind, um den Wiederherstellungszeitinformationen zu entsprechen, die synchron mit den Standardzeitinformationen sind, die einen Wiederherstellungszeitpunkt eines Abschnitts der ersten Bild-/Audiodaten angeben, der wiederhergestellt wird, wenn die zweiten Bild-/Audiodaten eingegeben werden.

6. Verfahren wie in Anspruch 5 beschrieben, wobei:
die beim Wiederherstellen der ersten Bild-/Audiodaten erzeugten Standardzeitinformationen fortlaufend erzeugt werden und der zu den zweiten Bild-/Audiodaten hinzugefügte Dekodierungszeitstempel DTS synchron mit den fortlaufend erzeugten Standardzeitinformationen erzeugt wird, wenn die Wiederherstellung der ersten Bild-/Audiodaten während des Eingebens und Aufzeichnens der zweiten Bild-/Audiodaten vom Eingabeabschnitt beendet wird.

7. Verfahren wie in Anspruch 6 beschrieben, wobei :
die Standardzeitinformationen fortlaufend erzeugt werden und die zweiten Bild-/Audiodaten synchron mit den fortlaufend erzeugten Standardzeitinformationen wiederhergestellt werden, so dass der zu den zweiten Bild-/Audiodaten hinzugefügte Dekodierungszeitstempel DTS synchron mit den sich auf die ersten Bild-/Audiodaten beziehenden Standardzeitinformationen ist, wenn die Wiederherstellung der ersten Bild-/Audiodaten während der Wiederherstellung der zweiten Bild-/Audiodaten beendet wird.

8. Verfahren wie in Anspruch 5 beschrieben, wobei
nachdem die Erzeugung der sich auf die ersten Bild-/Audiodaten beziehenden Standardzeitinformationen beendet worden ist, die Erzeugung von sich auf dritte Bild-/Audiodaten beziehende Standardzeitinformationen begonnen wird und der Dekodierungszeitstempel DTS, der zu den zweiten Bild-/Audiodaten nach Beendigung der Wiederherstellung der ersten Bild-/Audiodaten hinzugefügt worden ist, so erzeugt wird, dass er synchron mit den sich auf die dritten Bild-/Audiodaten beziehenden Standardzeitinformationen ist, wenn die Wiederherstellung der ersten Bild-/Audiodaten beendet wird und die Wiederherstellung der dritten Bild-/Audiodaten während des Eingebens der wiederherzustellenden zweiten Bild-/Audiodaten vom Eingabeabschnitt begonnen wird.

9. Verfahren wie in Anspruch 8 beschrieben, wobei:
Informationen, die eine Diskontinuität der Standardzeitinformationen angeben, zum Dekodierungszeitstempel, der zu den zweiten Bild-/Audiodaten hinzugefügt werden soll, hinzugefügt werden.

10. Verfahren wie in Anspruch 8 beschrieben, wobei:
nachdem die Wiederherstellung der ersten Bild-/Audiodaten beendet worden ist und die Erzeugung der Standardzeitinformationen der dritten Bild-/Audiodaten begonnen worden ist, die zweiten Bild-/Audiodaten wiederhergestellt werden, so dass der zu den zweiten Bild-/Audiodaten hinzugefügte Dekodierungszeitstempel DTS synchron mit den Standardzeitinformationen der dritten Bild-/Audiodaten ist, wenn die Wiederherstellung der ersten Bild-/Audiodaten beendet wird und die Wiederherstellung der dritten Bild-/Audiodaten während der Wiederherstellung der zweiten Bild-/Audiodaten begonnen wird.

11. Verfahren wie in Anspruch 4 beschrieben, wobei:
die sich auf die ersten Bild-/Audiodaten beziehenden Standardzeitinformationen fortlaufend erzeugt werden, der zu den zweiten Bild-/Audiodaten hinzugefügte Dekodierungszeitstempel DTS so erzeugt wird, dass er synchron mit den fortlaufend erzeugten Standardzeitinformationen ist, und ein zu dritten Bild-/Audiodaten hinzugefügter Dekodierungszeitstempel DTS synchron mit den fortlaufend erzeugten Standardzeitinformationen ist, wenn die Wiederherstellung der ersten Bild-/Audiodaten beendet wird und die Wiederherstellung der dritten Bild-/Audiodaten während des Eingebens und Aufzeichnens der zweiten Bild-/Audiodaten vom Eingabeabschnitt begonnen wird.

12. Verfahren wie in Anspruch 11 beschrieben, wobei:
die Standardzeitinformationen der ersten Bild-/Audiodaten fortlaufend erzeugt werden, die zweiten Bild-/Audiodaten so wiederhergestellt werden, dass der zu den zweiten Bild-/Audiodaten hinzugefügte Dekodierungszeitstempel DTS synchron mit den fortlaufend erzeugten Standardzeitinformationen ist, und die dritten Bild-/Audiodaten so wiederherstellt werden, dass der zu den dritten Bild-/Audiodaten hinzugefügte Dekodierungszeitstempel DTS synchron mit den fortlaufend erzeugten Standardzeitinformationen ist, wenn die Wiederherstellung der ersten Bild-/Audiodaten beendet wird und die Wiederherstellung der dritten Bild-/Audiodaten während der Wiederherstellung der zweiten Bild-/Audiodaten begonnen wird.

## Revendications

1. Procédé d'enregistrement et de reproduction de données d'image/de son utilisant un dispositif d'enregistrement/reproduction d'image et de son, le dispositif comportant :
une partie d'entrée (3, 6) dans laquelle des données d'image/de son sont entrées, et
un module d'enregistrement/reproduction (11) lequel est configuré pour enregistrer les données d'image/de son sur un support d'enregistrement (12) et reproduire celles-ci à partir du support d'enregistrement (12), et
un module de contrôleur (22),
le support d'enregistrement (12) incluant des informations de correspondance temporelle indiquant les données d'image/de son à reproduire en synchronisme avec un compteur d'informations temporelles standard, et
le module de contrôleur (22) est utilisé pour commander le dispositif afin de reproduire des premières données d'image/de son en synchronisme avec le compteur d'informations temporelles standard conformément aux informations de correspondance temporelle, le compteur d'informations temporelles standard comptant en progressant depuis l'instant de début de reproduction des premières données d'image/de son,
**caractérisé en ce que** :
le procédé inclut en outre l'utilisation du module de contrôleur (22) afin de commander le dispositif pour :
produire une estampille temporelle de décodage DTS représentant un instant par rapport au démarrage du compteur d'informations temporelles standard STC auquel des deuxièmes données d'image/de son sont entrées dans la partie d'entrée (3, 6) au moment de la reproduction des premières données d'image/de son,
enregistrer lesdites secondes de données d'image/de son sur ledit support d'enregistrement (12) conjointement avec ladite estampille temporelle de décodage DTS et séparément desdites première données d'image/de son, et
reproduire lesdites premières données d'image/de son et lesdites deuxièmes données d'image/de son simultanément de sorte que la reproduction des deuxièmes données d'image/audio commence avec l'estampille temporelle de décodage DTS et les deuxièmes données d'image/de son sont reproduites pendant la reproduction desdites premières données d'image/de son.

2. Procédé selon la revendication 1, dans lequel :
ledit module de contrôleur (22) est en outre utilisé afin de commander le dispositif pour :
enregistrer des informations temporelles de reproduction correspondant à l'instant de fin de l'entrée des deuxièmes données d'image/de son dans ladite partie d'entrée, et
terminer la reproduction desdites deuxièmes données d'image/de son sur la base desdites informations temporelles de reproduction, une fois que lesdites premières données d'image/de son ont été reproduites.

3. Procédé selon la revendication 1, dans lequel :
une pluralité des deuxièmes données d'image/de son sont toutes enregistrées conjointement avec des informations d'instant de reproduction respectives indicatives de l'instant respectif d'entrée desdites deuxièmes données d'image/de son pendant le temps de reproduction d'un élément des premières données d'image/de son.

4. Procédé selon la revendication 1, dans lequel :
ladite estampille temporelle de décodage DTS est produite en synchronisme avec des informations temporelles standards, lesquelles sont produites lorsque lesdites premières données d'image/de son sont reproduites.

5. Procédé selon la revendication 4, comportant l'étape consistant à :
changer ladite estampille temporelle de décodage DTS, laquelle est ajoutée et enregistrée dans lesdites deuxièmes données d'image/de son après l'enregistrement desdites deuxièmes données d'image/de son, afin qu'elle corresponde aux informations temporelles de reproduction lesquelles sont en synchronisme avec les informations temporelles standards qui sont indicatives d'un instant de reproduction d'une partie des premières données d'image/de son qui sont reproduites lorsque les deuxièmes données d'image/de son sont entrées.

6. Procédé selon la revendication 5, dans lequel :
les informations temporelles standards produites lors de la reproduction desdites premières données d'image/de son sont produites en continu et ladite estampille temporelle de décodage DTS ajoutée auxdites deuxièmes données d'image/de son est produite en synchronisme avec lesdites informations temporelles standards produites en continu, lorsque la reproduction desdites premières données d'image/de son se termine pendant l'entrée et l'enregistrement des deuxièmes données d'image/de son depuis ladite partie d'entrée.

7. Procédé selon la revendication 6, dans lequel :
lesdites informations temporelles standards sont produites en continu et lesdites deuxièmes données d'image/de son sont reproduites en synchronisme avec les informations temporelles standards produites en continu de sorte que l'estampille temporelle de décodage DTS ajoutée auxdites deuxièmes données d'image/de son sont en synchronisme avec les informations temporelles standards concernant lesdites premières données d'image/de son, lorsque la reproduction desdites premières données d'image/de son se termine pendant la reproduction des deuxièmes données d'image/de son.

8. Procédé selon la revendication 5, dans lequel :
une fois que la production des informations temporelles standards concernant lesdites premières données d'image/de son est terminée, la production d'informations temporelles standards concernant des troisièmes données d'image/de son est lancée, et l'estampille temporelle de décodage DTS ajoutée auxdites deuxièmes données d'image/de son une fois que la reproduction desdites premières données d'image/de son est terminée est produite pour être en synchronisme avec les informations temporelles standards concernant lesdites troisièmes données d'images/de son, lorsque la reproduction des premières données d'image/de son se termine et que la reproduction des troisième données d'image/de son commence pendant l'entrée des deuxièmes données d'image/de son enregistrées depuis ladite partie d'entrée.

9. Procédé selon la revendication 8, dans lequel :
des informations indicatives d'une discontinuité des informations temporelles standards sont ajoutées à l'estampille temporelle de décodage DTS à ajouter auxdites deuxième données d'image/de son.

10. Procédé selon la revendication 8, dans lequel :
une fois que la reproduction desdites premières données d'image/de son est terminée et que la production des informations temporelles standards desdites troisièmes données d'image/de son est lancée, les deuxième données d'image/de son sont reproduites de sorte que l'estampille temporelle de décodage (DTS) ajoutée auxdites deuxième données d'image/de son est en synchronisme avec les informations temporelles standards desdites troisièmes données d'image/de son, lorsque la reproduction desdites premières données d'image/de son se termine et que la reproduction desdites troisièmes données d'image/de son commence pendant la reproduction des deuxièmes données d'image/de son.

11. Procédé selon la revendication 4, dans lequel :
les informations temporelles standards concernant lesdites premières données d'image/de son sont produites en continu, une estampille temporelle de décodage DTS ajoutée auxdites deuxièmes données d'image/de son est produite pour être en synchronisme avec lesdites informations temporelles standards produites en continu, et une estampille temporelle de décodage DTS ajoutée à des troisième données d'image/de son est en synchronisme avec lesdites informations temporelles standards produites en continu, lorsque la reproduction desdites premières données d'image/de son se termine et que la reproduction des troisième données d'image/de son commence pendant l'entrée et l'enregistrement des deuxièmes données d'image/de son depuis ladite partie d'entrée.

12. Procédé selon la revendication 11, dans lequel :
les informations temporelles standards desdites premières données d'image/de son sont produites en continu, les deuxième données d'image/de son sont reproduites de sorte que l'estampille temporelle de décodage DTS ajoutée auxdites deuxièmes données d'image/de son est en synchronisme avec lesdites informations temporelles standards produites en continu, et les troisièmes données d'image/de son sont reproduites de sorte que l'estampille temporelle de décodage DTS ajoutée auxdites troisièmes données d'image/de son est en synchronisme avec lesdites informations temporelles standards produites en continu, lorsque la reproduction desdites premières données d'image/de son se termine et que la reproduction desdites troisièmes données d'image/de son commence pendant la reproduction des deuxièmes données d'image/de son.
